# EUROPEAN PATENT APPLICATION

(11) **EP 4 489 181 A1**
(43) Date of publication of application: **08.01.2025**
(21) Application number: 24186198.8
(22) Date of filing: 03.07.2024
(51) Int. Cl.: H01M 10/42, H01M 50/213, H01M 50/574

(54) **ENERGY STORAGE SYSTEM WITH RECHARGEABLE BATTERY-MODULES**

(30) Priority: 05.07.2023 IT 202300014010
(71) Applicant: Environ Energy Solution, 73020 Giurdignano Lecce (IT)
(72) Inventor: Caloro, Antonio, 73020 Giurdignano Lecce (IT)
(74) Representative: De Tullio, Michele Elio

(57) **Abstract**

The rechargeable battery-module energy storage system comprises an accumulator 10, at least one battery charger module 11, a control and management device 12, a shunt-coil device 13, a processing module 14; the processing module 14 is programmed and configured for estimating the amount of current flowing in the system, breaking supply of current, bringing the internal temperature of the system down to acceptable levels, triggering operations aiming at making each individual compromised component of the system safe, in a passive or active manner, directly from the inside, triggering operations aiming at managing, maintaining, and replacing each individual component.

The accumulator 10 comprises at least one battery-module 20, containing a plurality of electrolytic cells 100 and at least one safety device 110, intermediate bar contactors 30 and upper and lower bar contactors 50, at least one switch device 40, programmed-deformability elements 60, elements made of a deformable insulating elastic material 70, at least one deformable material 90 of the extinguishing expansion foam type; one or several battery-modules 20 can be coaxially and operationally connected to every battery-module 20, so as to form a stackable, multiple battery-module accumulator 10.

Methods of operation are provided for said accumulation system in both an active mode and a passive mode.

## Description

The present invention relates to the technical sector of battery energy storage systems. More specifically, it relates to an energy storage system with rechargeable battery-modules and to the methods to operate the system.

As known, an energy storage system (EES - Energy Storage System) is a system designed for storing electric energy upon charging, preserving it for a more or less long time in some way, in order to give it back more or less integrally whenever so requested. Substantially, such a system allows to separate electric energy generation from its use over time.

The battery energy storage systems (BESS) are a subsystem of the energy storage systems (ESS). The battery energy storage systems offer many advantages in terms of capacity, charging and discharging speeds, energy density, safety, and overall cost. A battery energy storage system comprises a casing containing a plurality of batteries (the present standard uses lithium-iron phosphate (LiFePo4) batteries) designed for storing electricity.

The battery energy storage systems (BESS) are available both as transportable systems and stationary systems.

At present, the battery energy accumulators use an electronic component, namely a Battery Management System or BMS, to control the status of the batteries accommodated in the accumulator; parameters like electrochemical cell temperature, voltage, peak value, charging status, etc., can be monitored and, in the presence of abnormal data, an alarm or another control/action is activated and the BMS breaks the electrical flow.

For this purpose, it is necessary to install a BMS between the battery and the inverter or the battery-charger. The charge in transit toward the batteries completely crosses the BMS which, because of constructive limits, hardly withstands intense discharges; this obliges manufacturers to limit system efficiency. Therefore, the operating costs of the battery increase exponentially, and its performances decrease as accumulation power increases.

The batteries of the BESS accumulators known do not use any swap system (like those mainly used in the automotive market for fast recharging of vehicles, not in that of stationary energy storage) and feature the following disadvantages:
- they are often incorporated within the casing with no chance to perform any maintenance services;
- they are often welded to each other in one battery pack without any possibility for replacing one individual cell that is possibly defective or damaged;
- their handling or replacement implies a risk of short-circuits, electrocution, and fire;
- their replacement also implies a replacement of the internal electronic circuits, which conversely feature a lifetime that is much longer than that of the batteries, and consequently this implies an unnecessary waste of raw materials;
- they need skilled personnel for being operated.

Also, concerning fire prevention, in the energy storage systems the use of fire prevention means is known between the cell packs, by using fire resistant devices complete with an explosion-proof device; these devices might also be equipped with suppression/extinguishment components.

Interchangeable battery systems are known in the present status of the art wherein the batteries connected in series to each other are equipped with control systems (BMS) closed inside a casing and electrically interfaced to each other via different types of connectors, usually rated for power levels not exceeding than 100 A.

Document TWI423140B illustrates an anti-counterfeiting battery pack and a respective authentication system, comprising battery cores provided with an internal identification unit and an external one, each complete with a first and a second reader of an authentication apparatus in order to read, compare, and calculate a first and a second inspection codes and to determine whether the core of the battery is an original product or not. Also, since every body of the battery core is provided with internal identification units and is sealed and protected by a protective coating, every battery core is hard to tamper.

Document TWI308406B illustrates a battery pack that includes several power bus lines which connect a plurality of battery strings in parallel, wherein every battery string has several batteries connected in series to each other; also, the battery pack has several conductors which provide electrical communication facilities between the battery strings, so that a battery in one battery string is connected in parallel to a battery in other battery strings.

Document US10763481 B2 describes improvements in the structural components and in the physical characteristics of the lithium batteries subjected to determined phenomena related to short-circuits and, consequently, subjected to high temperatures and to combustion; these improvements comprise the use of thin metallized (for example aluminium and/or copper) current collectors, materials and combinations thereof featuring a high shrinkage rate, materials that become nonconductive when exposed to high temperatures. Such improvements make it possible to withstand given defects (formation of dendrites, unexpected electrical overvoltage, etc.) inside a target lithium battery through the provision of an internal fuse, apparently internally to the considered lithium batteries themselves, which prevents undesired high temperature results caused by short-circuits.

Document US2016254576A1 illustrates an accumulator that comprises batteries electrically connected to each other, wherein every battery comprises individual electrochemical cells; each of the electrolytical cells being thermally insulated from the others. Each of said electrochemical cells includes a monitoring device configured for electrically separating it from the others if at least one measured value, as monitored by a monitoring device, is outside a predetermined range of values.

Document CN109417155A illustrates a short-circuit protection device for a battery monitoring system, provided with a battery pack comprising a plurality of electrolytic cells, a battery monitoring device for assessing the battery voltage, and a plurality of electrical wires which connect the battery and the battery monitoring device, formed of one portion designed for elution, wherein an insulating coating is detached in a median zone along the longitudinal direction, and a cored wire is exposed. Whenever the portion designed for elution is dipped into an electrolyte, the portion designed for elution (6) is eluted in the electrolyte and melted.

It can be inferred from said patent documents that no energy storage system with rechargeable battery-modules is known in the present status of the art that features all the following elements and respective characteristics:
- an electrical connection system provided with busbars directly connected to output terminals, which are in turn connected to an inverter and to a battery charger;
- swapping batteries featuring a modular design and provided with open connectors, power connectors, and interface connectors;
- powerpack modules provided with zones made of a programmed-deformability, elastic or foamy conductive material;
- a battery that can be disassembled (no welding) and regenerated;
- a powerpack that is easily maintainable and revampable.

A general object of the present invention is to provide a rechargeable module battery pack, each module being provided with the most sophisticated safety technologies, irrespective of the system dimensions, and acting in a passive or active manner directly from the inside of the accumulator.

Another object of the present invention is to provide a battery energy storage system that can support big amounts of current and prevent outbreaks of fire internally to the BESS energy accumulators while assuring an immediate recovery.

A further object of the present invention is to provide a battery energy storage system that can be integrated inside to the battery pack of a BESS accumulator by interacting therewith, via an external electric system.

Another object of the present invention is to provide a battery energy storage system whereby it is possible to maintain and/or replace an individual cell that is defective or damaged, if any.

This object and others are achieved by a rechargeable battery-module energy storage system as set forth, in its most general form, in claim 1 and, in one particular embodiment thereof, in its sub-claims.

A further object of the present description is to provide some methods to operate for the energy storage systems using rechargeable separated battery-modules, as set forth in claims 13 thru 17.

The invention will be better understood by reading the following detailed description which makes reference to one preferred, but not exclusive, embodiment, provided for explanatory, non-limitative purposes, and with special reference to the attached figures, wherein:
- figure 1 shows a functional block diagram of a rechargeable battery-module energy accumulation system provided with a three-battery-module accumulator applied to four contactors;
- figure 2 shows a detailed axonometric view of the three-rechargeable battery-module accumulator shown in figure 1 applied to the contactors;
- figure 3 shows a detailed axonometric view of the accumulator according to the previous figures before its application to the contactors;
- figure 4 shows an exploded axonometric view of the upper and lower elements of the accumulator;
- figure 5 shows an exploded axonometric view of an intermediate contactor provided with a switch device;
- figure 6 shows an axonometric view of one out the three battery-modules of the accumulator according to the previous figures;
- figure 7 shows a side view of the battery-module according to figure 6;
- figure 8 shows an exploded axonometric view of the battery-module according to figures 6 and 7 provided with a self-extinguishing device;
- figure 9 shows a cross sectional view of the battery-module according to the previous figures before the operation of the self-extinguishing device;
- figure 10 shows a cross sectional view of the battery-module according to figure 9 after the operation of the self-extinguishing device;
- figure 11 shows a schematic view of the electric interaction between the devices of the system.

In the attached figures, identical or similar elements are identified by the same reference numerals.

### Detailed description of the invention

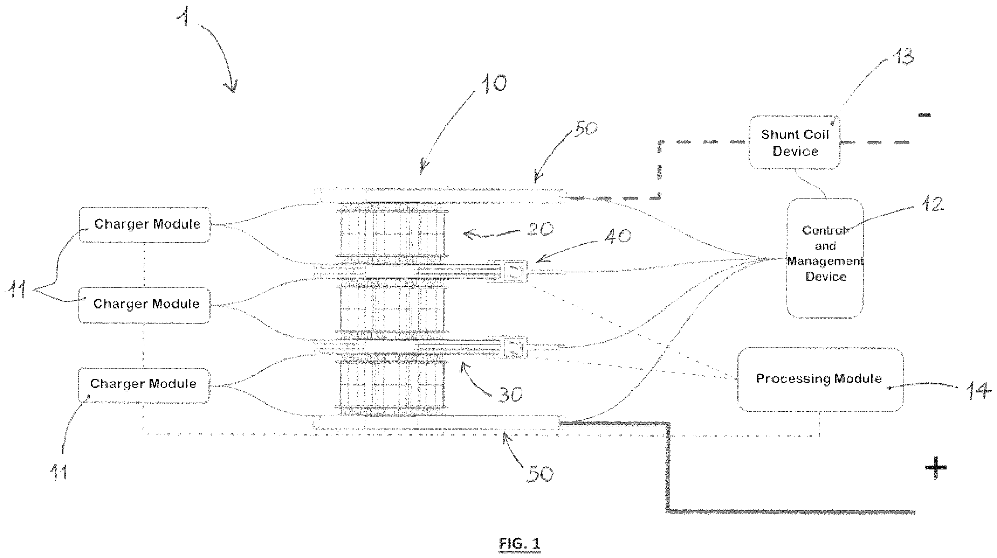

Figure 1 shows one preferred, but not limitative, embodiment of an energy storage system 1 with rechargeable battery-modules according to the present invention. In figure 1, in particular, the system 1 is shown operationally coupled with an accumulator 10 formed of three rechargeable battery-modules 20 stacked onto each other, provided with metal bar contactors 30, 50 and switch devices 40.

Said storage system 1 can be designed and configured for being operationally coupled with stationary storage systems for use in residential structures, productive activities, catering activities, or hotels; the same system can be installed inside electrical vehicles for managing interchangeable batteries, in the perspective of a 100% sustainable electric mobility.

The energy storage system 1 with rechargeable battery-modules is provided with electrical connection and control means capable of supporting big amounts of currents in excess of 100A.

In order to operate, the stacked battery-modules 20 are connected to bar contactors 30, 50 connected to output terminals, which are in turn connected to an inverter; the circuit is opened or closed by a shunt-coil 13 which receives power from a control and management device (BMS) 12, designed and configured for triggering a flow of current in the accumulator and, in case of malfunction, triggers a chain action which finally results in opening a switch device 40.

This way, the power current passes through the bar contactors 30, 50 instead of through the BMS 12, and the circuit is made safe without any need for using expensive BMSs rated for high current values.

The switch device 40 of the energy storage system according to the present invention is designed and configured for triggering a flow of current between the stacked battery-modules 20 and a processing module 14, which is operationally connected to the BMS 12; the processing module 14 is programmed and configured for interfacing to sensors, actuators, and other components contained in the individual battery-modules that contain the cells and the electrical components connected in parallel. More in general, the module 14 is responsible for monitoring every battery module individually.

Another object of the processing module 14 is to operate the various devices which every battery-module 20 can be equipped with, such as, for instance: a self-extinguishing device, a valve, a turbine for moving fluids, sensors, devices for electrical detaching according to a particularly advantageous embodiment, the processing module 14 is programmed and configured for operating a self-extinguishing device.

With reference to figure 1, the system 1 being connected to its respective slot of the accumulator 10 it is possible to exchange information and controls with each individual multiple-cell battery-module 20: this feature makes it possible to develop strategies of use and intervention directly with each individual battery-module.

In the moment when the accumulator is accommodated in the slot, its respective recognition protocol is started; once the characteristics of the accumulator and of its layout are identified, it is possible to start tests aimed at comparing the battery parameters with the target data.

Following these tests, the switch devices 40 are activated to allow for a serial connection and the subsequent use of the accumulator.

In the case of an extended discharge of the accumulator, whenever the internal temperature of a battery-module exceeds the optimum operating levels of the electrochemical cells 100, the processing module 14 can activate one or more turbines for making a liquid internal to the battery-module flow, so as to bring the temperature down to acceptable levels.

In the passive mode, i.e. whenever a battery-module is not inserted into its respective seat in the accumulator, in the moment when a thermal event or a production of combustion gas or another phenomenon that is outside the parameters occurs, the self-extinguishing module can autonomously activate itself so as to make the compromised battery-module safe.

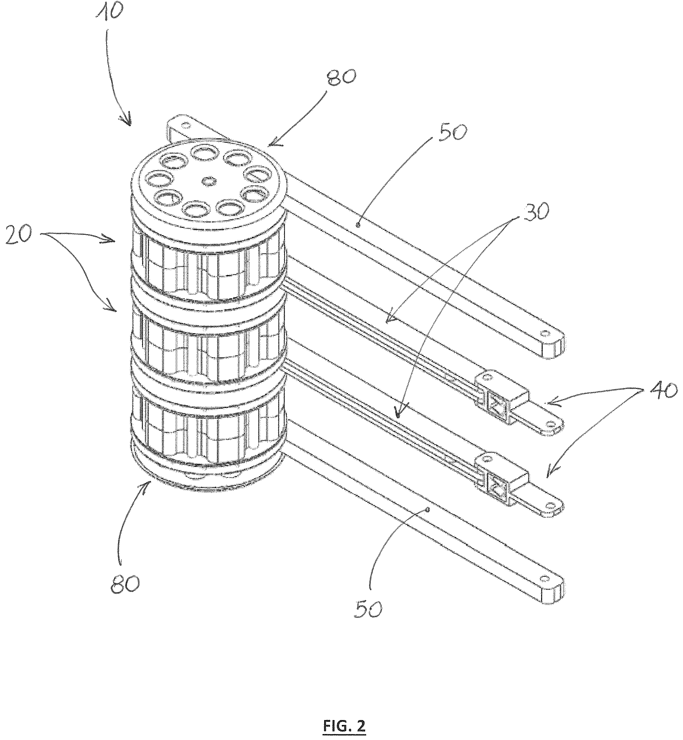

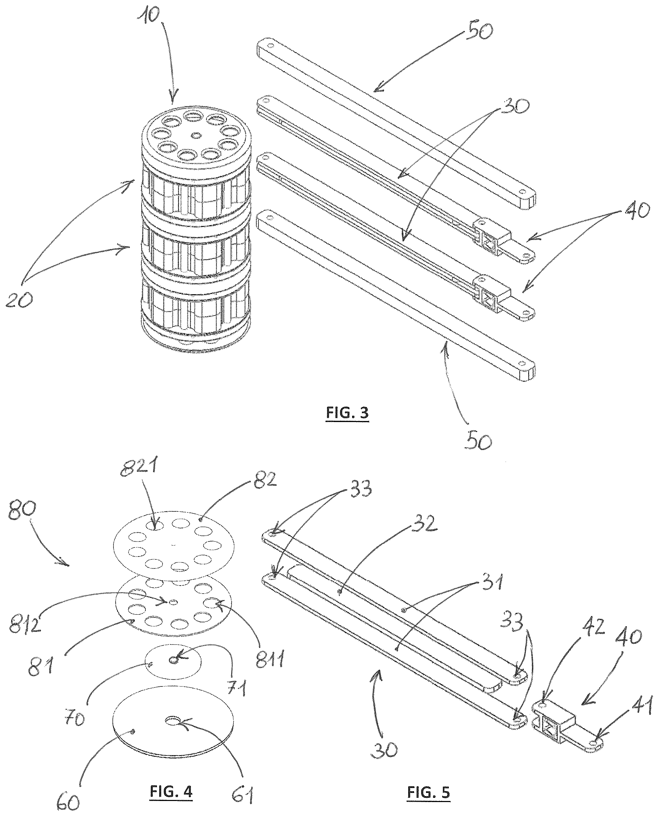

The accumulator 10, illustrated in the axonometric views of figures 2 and 3, applied to the intermediate bar contactors 30 and to the upper/lower bar contactors 50 respectively (figure 2) and before the application to said contactors (figure 3), comprises three electrically separated and rechargeable battery-modules 20, each containing a set of electrochemical cells 100; as shown here, said battery-modules 20 are stacked and are applied to said contactors 30 and 50 in a removable manner.

Whereas the function of the bar contactors 50 is to allow a flow of current value in excess of 100A, in order to exploit the battery-module at the best, the function of the intermediate bar contactors 30 is that of isolating every battery-module from the serial connection through the operation of the switch device 40; this allows to take out, insert, and move each individual battery-module 20 in a fully safe manner, without any risks of sparks, accidental short-circuits, or electrocution for the operator, as typical with sliding contacts.

This innovation makes it possible for every battery-module to be also handled by non-skilled personnel.

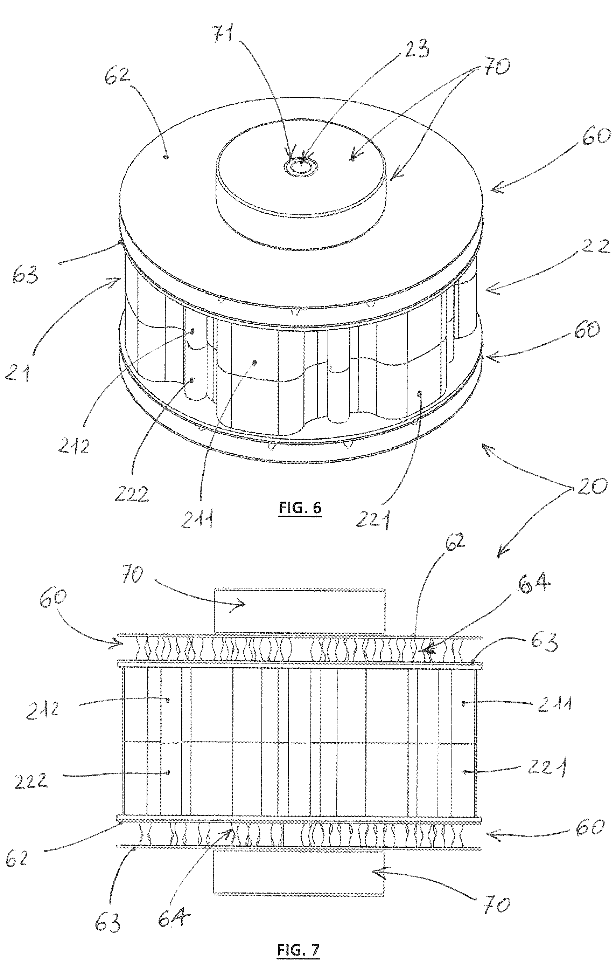

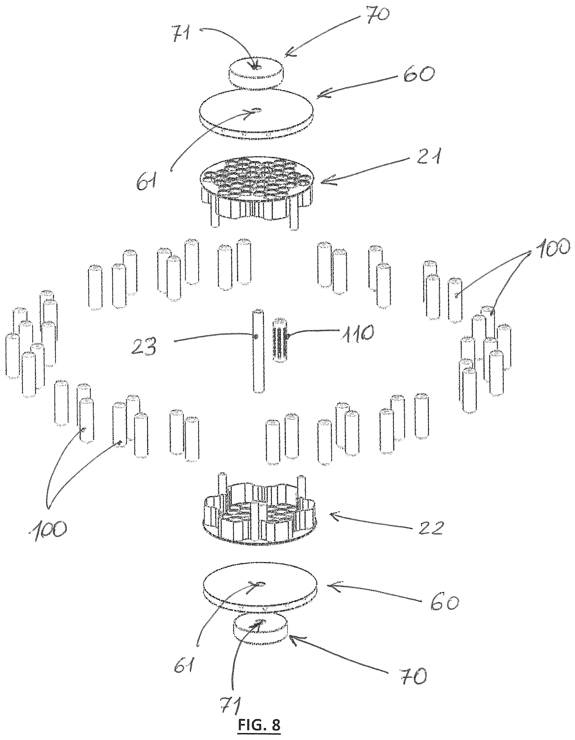

Figures 6 and 7 show an axonometric view and a side view respectively, and figure 8 is an exploded view of a multiple-cell battery-module 20.

Every battery-module 20 features an almost cylindrical shape and comprises two elements, namely an upper element 21, forming a cover, and a lower element 22, forming a base, superimposable to and fitting with each other in such a way as to form a cylindrical box-shaped casing for accommodating a set of electrochemical cells 100.

A number of coaxial through holes, namely upper through holes 213 and lower through holes 223 respectively, are cut in the upper circular surface 210 of the upper element 21 and in the lower circular surface 220 of the lower element 22, to form seats for the electrochemical cells 100 inserted in the casing 21, 22 of the battery-module 20.

The side surfaces 211 and 221, of the upper element 21 and of the lower element 22 respectively, make up a containment grid which allows to align the cells with said through holes 213, 223 and the contact with the circular surfaces 63 of every programmed-deformability element 60, provided with a central through hole 61, forming a lower and upper terminal in every battery-module 20.

Every programmed-deformability element 60 also comprises a second circular surface 62, coaxial to the circular surface 63 designed for an electrical connection of the battery-modules; a deformable conductive material 64 is interposed between the surfaces 62, 63.

Pins 212, 222 are connected on the circular surfaces 210, 220, of the upper element 21 and of the lower element 22 respectively, for locking the box-shaped casing 21, 22 of the battery-module 20, once closed.

A self-extinguishing device 110, having the same size and shape as the electrochemical cells 100, is present inside the multiple-cell battery-module 20, in an offset position.

In a preferred embodiment, the self-extinguishing device 110 comprises a container element, for example a bivalve-type one, provided with drainage holes for an extinguishing or fire retardant expansion foam 90, inside which there are present two or more chemical elements contained in plastic bags specifically reserved for this purpose; a heating element is positioned in the middle of the device which, once activated, determines a collapse of the chemical element containers, whose subsequent mixing triggers a chemical reaction, which produces an extinguishing or flame retardant foam which, thanks to its own physical characteristics, expands and produces a pressure sufficient to deform the programmed-deformability elements 60, which operate as terminals, and a subsequent electrical detachment of the cells 100.

Two further circular elements 70, made of a deformable elastic material, provided with central through holes 71, and operating a deformable means for easing up or performing the functions of the element 60 in the case of a malfunction, are superimposed above and below the two programmed-deformability elements 60 in every multiple-cell battery-module 20 (in the example depicted in figures 2 and 3, above and below the central battery-module) coaxially thereto.

Each of the two elements 70, having a diameter smaller than that of the element 60, is made of an insulating rubbery material rated for warranting a correct operating pressure on the cells 100 and maximum deformability whenever the self-extinguishing device is activated; this way, system effectiveness and removal of every element 60 away from the cells 100 are warranted under the action of the extinguishing or flame retardant foam 90.

A cylindrical pin 23 passing through said central through holes 61, 71 holds the elements 21, 22 of the casing, the programmed-deformability elements 60, and the elements made of a deformable elastic material 70 that make up the multiple-cell battery-module 20, coaxially connected to each other to form a pack, which further two multiple-cell battery-modules 20 are coaxially stacked and connected to, so as to form the three stacked battery-module accumulator illustrated in figures 2 and 3.

Figure 4 shows an exploded axonometric view of one of the two elements 80 superimposed to the stacked battery-modules 20 above and below; said element 80 comprises a first plate 81, provided with through holes 811 forming gripping points for the accumulator 10 for its transportation, and a central through hole 812 for inserting the cylindrical pin 23, and a second plate 82 provided with through holes 821 coaxial to said through holes 811, also necessary to form a gripping point for the accumulator 10.

Figure 5 shows an exploded axonometric view of an intermediate bar contactor 30, consisting of two metal bar semi-contactors 31 made of a conductive material, for example aluminium, provided with through holes 33 at the two ends for the electrical links or the connection to the switch devices 41; a bar 32, made of an insulating deformable material, is interposed in an intermediate position with respect to said bar semi-contactors 31, designed for preventing any current flow between the two metal bars 31.

The device 40 operates as a switch to trigger a current flow in every bar contactor 30; this allows to temporarily connect the battery-modules in series to each other and to allow supply of the specified voltage and current.

Simultaneously, once the series is closed, the switch device 40 allows an exchange of information with the Battery Management System (BMS) 12, as necessary to control the accumulator parameters.

Every upper/lower bar contactor 50 is formed of a metal bar made of a conductive material, for example aluminium, provided with through holes 51 at the two ends.

The circular seats of the accumulator formed between the programmed-deformability elements 60 and the elements made of a deformable elastic material 70 form seats for a tangential insertion and connection of the bar contactors 30, 50 with the accumulator 10.

The system according to the present invention supports two operating steps featuring a different configuration of the connections: namely, an accumulator charging step, and an accumulator discharging step.

In the accumulator charging step, the switch device 40 is open and in this configuration the battery-modules of the accumulator are electrically separated: the positive-charge bar contactors, for example the semi-contactors 311, 313, and the contactor 502 are physically independent of the negative charge contactors, for example the semi-contactors 312, 314 and the contactor 501; this way, it is possible to recharge each individual battery-module or group of battery-modules, depending on the accumulator's size, in parallel.

This configuration allows to multiply the current input to the accumulator while using lower voltages, so as to warranty an accumulator recharge within times considerably lower than those which can be achieved in the present status of the art.

In the accumulator discharge step, the switch device 40 is closed and, in this configuration, the battery-modules of the accumulator are electrically connected in series: the pairs of bar semi-contactors 311 and 312, and the pairs of bar semi-contactors 313 and 314 make-up extensions of the closed circuit from the switch devices 40. This configuration allows to exploit the final voltage, which equals the summation of the voltages of the individual battery-modules of the accumulator, at the best.

The contactors being open provide a great surface for electrical exchange, whereby it is possible to make information pass from and toward the accumulator 10; two types of contactors, wider at the end and thinner in the middle, are clearly visible outside, and are respectively:
a. power contactors 50, the task of which is to supply the full energy contained in a battery-module in a time as short as possible;
b. interface contactors 30, the task of which is to establish a link between the accumulator and an external control system; through these contactors 30, it is possible to send controls to the apparatuses internal to the individual battery-modules, so as to activate the self-extinguishing devices as well as other accessories which are preparatory to a good operation and safety of the accumulator, such as, for instance: a self-extinguishing device, a valve, a turbine for causing fluids to move, sensors, electrical detaching devices, etc..

The accumulator 10 features a modular design, and its length and number of battery-modules 20 can be tailored to allow its series connection practically indefinitely, up to reaching voltages in excess of 800 V; for every battery-module 20, it is possible to provide a variable number of accessories according to the actual requirements.

Internally to the battery-modules of the accumulator, there is a group of cylindrical (or prismatic) electrochemical cells, at the base or on the top of each of which there are two zones: the former is made of a programmed-deformability elastic or foamy conducting material, the second zone consists of an insulating ring made of an elastic material which completes or, in the case of a failed deformation, provides for the function reserved for the element 60, thus warranting the right deformation necessary to break the electrical contact between the electrochemical cells 100 and the surface 63 of the element 60: thanks to this operating scheme, upon activation of the extinguishing foam 90, the expansion of the latter results in deforming the layer of conductive material and of the insulating elastic ring, so as to break the electrical contact between the electrochemical cells 100 and the contactors 30, 50 of the accumulator 10, thus increasing the safety and prevention degrees of the system.

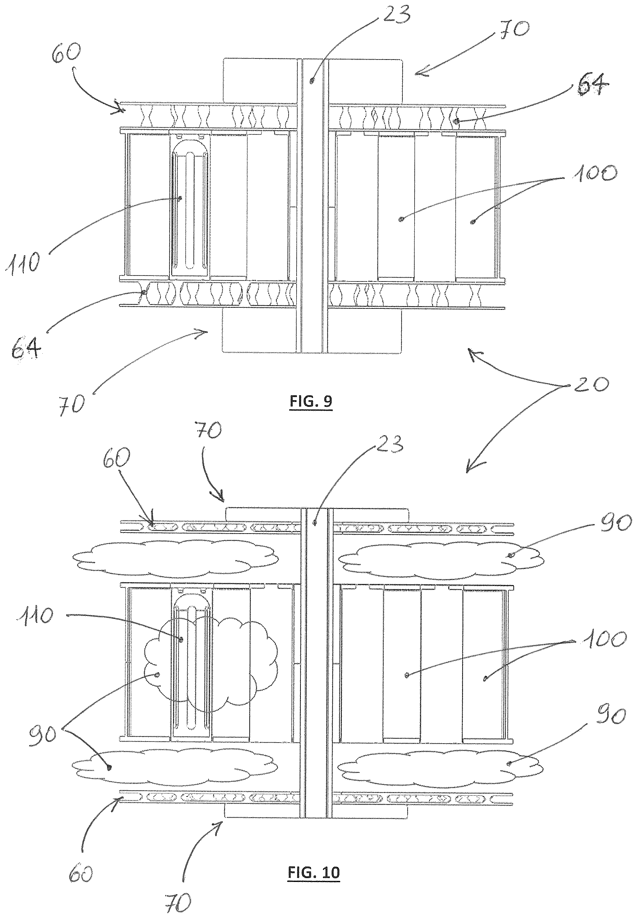

Figures 9 and 10 show a cross sectional view of a battery-module, before the operation of the self-extinguishing device (fig. 9) and after the operation of the self-extinguishing device (fig. 10), respectively.

In the case of a malfunction or temperature alarm, the processing module 14 activates the self-extinguishing module and simultaneously the switch devices 40 are opened to electrically isolate the malfunctioning battery-module and break the supply of current from the accumulator.

In the case of a thermal runaway, the processing module 14 sends a signal to the self-extinguishing module 110, which triggers a first step whereby chemical substances are poured, whose reaction creates a foam of a structural type, whose volume can increase by more than 10 times in few seconds.

In a second step, the pressure generated internally to the chamber of the battery-module increases up to exceeding the physical strength of the programmed-deformability elements 60 (upper elements 62 and lower elements 63) and of the element made of a deformable elastic material 70, thus determining a subsequent electrical detachment of the elements 62 and 63 from the electrochemical cells 100.

The extinguishing foam performs a double function: the former consists of creating such a pressure (expanding force greater than 5000 kPa) inside the battery-module as to make the extinguishing foam go out through the interstitial zone between the cells 100 and the deformable surface 63, thus breaking the electrical contact and making any accidental recovery impossible; the second function performed by the extinguishing foam consists of completely wrapping all cells, so as to saturate the full expansion space designed for this specific function available, so as to form a fire barrier which prevents or slows flame propagation down. No spot weldings are present in the accumulator, so it can be disassembled and regenerated, thus allowing to reduce the use of raw materials and to shorten the production chain.

Unlike the fire prevention solutions known so far, which are basically of a passive type, i.e. arrangements that intervene upon appearance of very intense heat developments or in the presence of flames, with a consequent production of toxic smokes and percolates of various natures, the self-extinguishing safety device of the system according to the present invention is programmed or being activated according to the typical or standard electrical development curves specified as a function of the chemistry of the electrochemical cells used.

In the passive mode, the device not only intervenes in the case of an intense heat, flame, smokes, or the like, but also, in the active mode, driven by the processor following an abnormal behavior detected internally to each individual battery-module or to the battery-modules that make-up the accumulator. Thanks to the swapping battery technology used, it is possible to intervene immediately and in total safety by replacing the battery-module without further inconveniences.

The self-extinguishing safety device is activated in the following cases:
A) in the passive mode, should the sensor installed inside the battery-module 20 detect an excess of heat or smokes or similar values; the passive mode basically applies when transporting the accumulator, i.e. whenever it is not connected to a control and activation system;
B) in the active mode, the accumulator being positioned in its own seat and consequently communicating with the processing module 14; the actions are recorded, compared to, and controlled by the processing module, which activates the safety devices in each individual battery-module 20 or in groups of battery-modules 20, depending on the intensity, and following an anti-propagation scheme, which aims at preventing or hampering propagation of the thermal event; in the active mode, it is possible to make the system safe in a preventive manner, to prevent catastrophic events not depending on the accumulator, such as fires, floodings, explosions, etc.; from propagating; in the active mode, it is possible to collect data on the operation of the accumulator.

Further accessories can be installed internally to the battery-modules, for example:
- dedicated control electronic circuits;
- programmed-deformation elements for electrical detachment.

In other alternative embodiments, the rechargeable battery-module energy storage system according to the present invention is provided with accessory elements in the form of electrochemical cells for secondary actions, such as:
a. ventilation;
b. valve function;
c. electrical detachment function;
d. sensors.

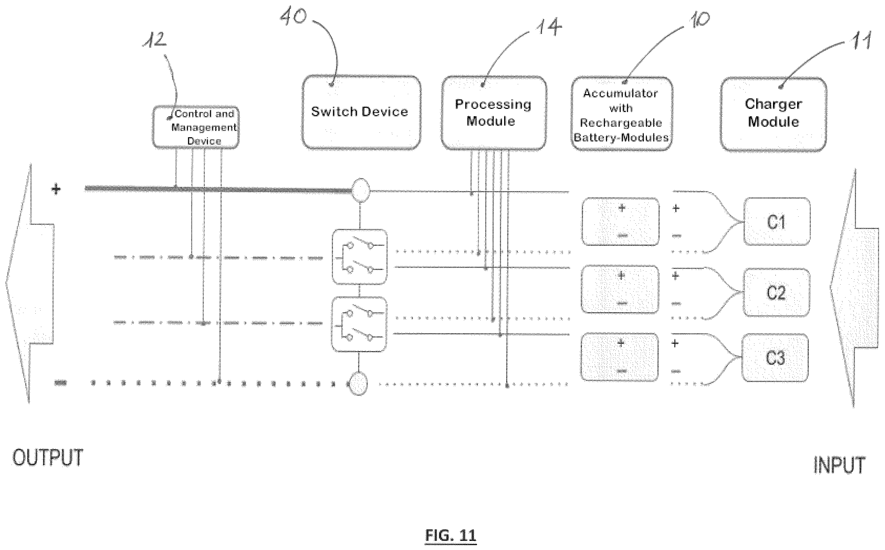

With reference to figure 11, the description made above for the rechargeable battery-module energy storage system also corresponds to the description of a method for operating said system in the active mode, comprising the following steps:
- connecting the system to an accumulator contactor specifically for an exchange of information and controls with each individual battery-module; this feature makes it possible to process strategies of use and intervention directly with each individual battery-module;
- starting a recognition protocol; once the characteristics of the accumulator and its layout are identified, it is possible to start comparative tests between the battery parameters and the target data;
- activating the switch devices that allow a serial connection and the consequent use of the accumulator;
- activating the self-extinguishing module in the case of a malfunction or temperature alarm:
   ∘ the processing module sends a signal to the self-extinguishing module, which triggers a reaction of the chemical substances, thus determining an increase in the foam volume;
      - the pressure generated inside the chamber of the battery-module grows up to exceeding the physical strength of the programmed-deformability elements, thus determining a consequent electrical detachment from the electrochemical cells;
- opening the switch devices to electrically isolate the malfunctioning battery-module and break supply of current from the accumulator;

In another method of operation, in the active mode, in the case of an extended discharge of the accumulator, whenever the inner temperature of the battery-module exceeds the optimum operating levels specified for the electrochemical cells 100, the processing module 14 can activate one or several turbines for moving a liquid internally to the battery-module, so as to bring the temperature down to acceptable levels.

A further method of operation of the rechargeable battery-module energy storage system in the passive mode, i.e. wherever a battery-module is not inserted into its seat in the accumulator, in the moment when a thermal event or a production of combustion gases or another phenomenon outside the parameters, the self-extinguishing module can activate itself autonomously to make the compromised battery-module safe.

Further characteristics of said method of operation can be inferred without any special difficulties by one skilled in the sector, on the basis of the above description of the storage system 1.

According to what said above, it is possible to understand how a storage system 1 and a method of operation of the type described above make it possible to fully achieve the objects previously reported, with reference to the present status of the art.

The technology that is on the basis of the system according to the present invention is of a swapping type, and is generally used in the automotive world for a fast recharge of vehicles, i.e. one featuring a structure that allows to collect a big number of electrochemical cells (battery elements) within one accumulator (powerpack), while warranting an easy maintenance thereof, an easy system revamping, and a full exploitation of the residual capacity of the battery-modules used.

Also, the accumulation system 1 and its respective method of operation of the type described above make it possible to advantageously use a rechargeable module battery pack having the following peculiarities:
- is provided with the most sophisticated safety technologies, irrespective of the system size, operating in a passive or active manner, directly from inside the accumulator;
- is capable of withstanding big amounts of current and preventing outbreaks of fire internally to the BESS energy accumulators, while assuring an immediate recovery thereof;
- can be integrated internally to the battery pack of a BESS accumulator by interworking therewith, through an external electric system;
- possibility of maintenance and/or replacement of one individual cell that is possibly defective or damaged;
- the system is capable of individually manage all battery-modules that make-up the accumulator itself;
- the anti-propagation system is capable of activating several self-extinguishing elements depending on the magnitude of the event, both inside and outside the accumulator;
- the system is capable of managing different accessory modules for a management internal to the battery-module.

The subject of the invention is susceptible of numerous modifications and variants, all falling within the inventive concept expressed in the attached claims.

The embodiments and details implementations can be widely modified with respect to what described above and illustrated for explanatory, non-limitative purposes, without leaving the range of protection of the present invention.

Even though the invention has been described with a special reference to the attached figures, the reference numerals used in the description and in the claims are used in order to improve the understandability of the invention, but they do not represent any limitations to the range of protection claimed.

## Claims

1. Energy storage system with rechargeable battery-modules comprising:
- an accumulator (10), designed and configured to store electrical energy during charging,
- at least one charger module (11), operationally connected to the accumulator (10), designed and configured to supply energy to at least one rechargeable battery-module,
- a control and management device (12), operationally connected to the accumulator (10), designed and configured to control at least one rechargeable battery-module,
- a shunt coil device (13), designed and configured to trigger the current flow in the accumulator,
- a processing module (14), operationally connected to the control and management device (12),
wherein the processing module (14) is programmed and configured to:
- estimate the amount of current circulating in the system,
- interrupt the power supply,
- bring the internal system temperature to acceptable levels,
- trigger operations to secure a single compromised component of the system, either passively or actively, directly from within,
- trigger operations aimed at the management, maintenance, replacement of each single component,
**characterized by the fact that** the accumulator (10) includes:
- at least one battery-module (20), containing a plurality of electrolytic cells (100) and at least one safety device (110),
- intermediate bar contactors (30) and upper and lower bar contactors (50), in conductive material, suitable for opening and closing the circuit,
- at least one switch device (40), capable of triggering the current flow in each intermediate bar contactor (30),
- programmed deformability elements (60), configured for the connection or alternatively the electrical detachment of each battery-module (20) from the system,
- elements in deformable insulating elastic material (70), configured to facilitate or replace, in the event of a malfunction, the functionality of the elements (60),
**and by the fact that** one or more battery-modules (20) can be coaxially and operationally connected to each battery-module (20) to form an accumulator (10) with multiple electrically separating stackable battery-modules.

2. Energy storage system according to claim 1 **characterized in that** each battery-module (20) of the accumulator (10) comprises a nearly cylindrical box-shaped casing consisting of:
- an upper element (21), forming a cover, provided with an upper circular surface (210), on which a series of through holes (213) are placed, and a side surface (211),
- a lower element (22), forming a base, provided with a lower circular surface (220), on which a series of through holes (223) are placed, and a side surface (221),
- pins (212, 222) connected on the circular surfaces (210, 220) of the upper element (21) and of lower element (22) respectively, for locking the upper element (21) on the lower element (22) in the closed position,
- at least one element with programmed deformability (60), stacked and overlapping said upper circular surface (210) or subjected to said lower circular surface (220), provided with central through holes (61) and consisting of circular surfaces (62, 63) between which a deformable conductive material is interposed (64),
each pair of through holes (213, 223) being coaxial and forming a seat for the sliding vertical slot of each electrolytic cell (100), the side surfaces (211, 221) constituting the walls for containing all the electrolytic cells (100) and each circular surface (62, 63) being intended for the electrical connection of the battery-modules

3. Energy storage system according to in claim 1 **characterized by the fact that** each of the two elements with programmed deformability (60), coaxially with it, are overlapped two further circular elements (70), in deformable elastic material, provided with central through holes (71), said elements (70) being made of an insulating rubbery material and calibrated to ensure the correct operating pressure on the cells (100) and maximum deformability in the event of activation the safety device (110).

4. Energy storage system according to any of the previous claims **characterised by the fact that** the safety device (110) is a self-extinguishing device having the same size and shape as an electrolytic cell (100).

5. Energy storage system according to claim 4 **characterized by the fact that** the self-extinguishing safety device (110) consists of a container provided with drainage holes for the passage of at least one extinguishing material (90), in the center of the device being positioned a heating element that activated determines the collapse of said container which, by expanding, produces a pressure sufficient to deform the programmed deformability elements (60), forming terminals, and the consequent electrical detachment of at least one electrolytic cell (100).

6. Energy storage system according to any of the previous claims **characterized by the fact that** a cylindrical pin (23) passing through the central holes (61, 71), keeps coaxially connected the elements (21, 22) of the box-shaped casing, the programmed deformability elements (60) and the elements in deformable elastic material (70) that make-up each battery-module (20).

7. Energy storage system according to any of previous claims **characterised by the fact that** two elements (80) are stacked at the upper and lower ends of the accumulator (10), each consisting of a first plate (81) provided with through holes (811) serving as gripping points for the accumulator (10) for the transport thereof and a central through hole (812) for inserting the cylindrical pin (23), and by a second plate (82) provided with through holes (821) coaxial to said through holes (811) also necessary to create a gripping point for the accumulator (10).

8. Energy storage system according to any of previous claims **characterised by the fact that** circular seats are formed between the programmed deformability elements (60) and the elements made of elastic deformable material (70) for the insertion and connection of intermediate bar contactors (30) and upper/lower bar contactors (50) arranged tangentially with respect to said accumulator elements.

9. Energy storage system according to any of previous claims **characterised by the fact that** each of the intermediate bar contactors (30) consists of two semi-bar contactors (31) made of conductive material, e.g. aluminum, between which is interposed a bar (32) made of a deformable insulating material suitable for not allowing the current flow between the two bars (31), each semi-bar contactor (31) being provided with through holes (33) for fixing to one end of the device (40) acting as a switch capable of triggering the current flow in each bar contactor (30) in order to temporarily connect the battery-modules (20) in series with each other allowing the expected voltage and current to be supplied.

10. Energy storage system according to any of previous claims **characterised by the fact that** each of the upper/lower bar contactors (50) consists of a bar made of conductive material, e.g. aluminum, provided with through holes (51) at both ends for electrical connections.
